# DEMANDE DE BREVET EUROPEEN

(11) **EP 0 650 815 A1**
(43) Date de publication de la demande: **03.05.1995**
(21) Numéro de dépôt: 94420299.3
(22) Date de dépôt: 28.10.1994
(51) Int. Cl.: B29B 17/02, B29C 47/68, B29C 47/60, B29B 13/10, B01D 33/06

(54) **Procédé et dispositif de séparation de matières plastiques**

(30) Priorité: 03.11.1993 FR 9313305
(71) Demandeur: NOVALIS FIBRES, F-69003 Lyon (FR)
(72) Inventeur: Brenna, Umberto, I-20092 Ciniskello B. (MI) (IT); Ianni, Fernando, CH-7000 Chur (CH); Mocci, Giorgio, I-20052 Monza (MI) (IT); Zeh, Bernhard, CH-7203 Trimmis (CH)
(74) Mandataire: Esson, Jean-Pierre

(57) **Abrégé**

L'invention concerne un procédé et un dispositif de séparation des composants d'un mélange de matières plastiques ou polymères.

Ce procédé consiste à alimenter un mélange de matières plastiques dans une vis d'extrusion 1 comprenant une zone de fusion 11, suivie d'une zone de compression 12 dans laquelle la fraction fondue du mélange s'échappe d'un espace de confinement 14 par un orifice 15 vers une zone d'évacuation. Ainsi, il est possible de séparer les constituants d'un mélange par fusion successive de ceux-ci.

## Description

L'invention concerne un procédé et un dispositif de séparation des composants d'un mélange de matières plastiques ou polymères.

Elle concerne plus particulièrement un procédé et un dispositif permettant de séparer des matières plastiques composantes d'un mélange, présentant des points de fusion différents.

Selon l'état actuel de la technique, les mélanges de polymères sont très souvent réalisés avec un agent de compatibilité et utilisés dans des applications peu exigeantes. Les thermoplastiques techniques perdent ainsi à tout jamais une part importante de leur valeur. On obtient un mélange de polymères doté de faibles propriétés mécaniques et chimiques. Afin de préserver notre environnement, on ressent, par conséquent, la nécessité de maintenir le plus longtemps possible la valeur relativement élevée des polymères recyclés et, notamment, des thermoplastiques techniques. Il existe une possibilité de maintenir la valeur des mélanges de polymères. Elle consiste à les séparer de manière à ce que l'on retrouve les propriétés initiales du polymère. Le brevet DE 302 72 52 décrit la séparation des composants d'un mélange de matières plastiques par refroidissement et broyage à une température inférieure à la température de fragilité de l'un des composants du mélange. Il en résulte des granulométries différentes permettant une séparation par tamisage. Les inconvénients majeurs de ce procédé sont les coûts élevés en matière d'énergie et de procédé entraînés par le refroidissement et le broyage. Les brevets US 4 830 188 et US 5 126 058 décrivent un procédé de séparation des déchets plastiques par flottation et exploitation des différences de densité des composants du mélange. Ce procédé ne fonctionne que si les différences de densité sont considérables et nécessite des surfaces de séparation et des quantités d'eau importantes. De plus, il est possible que les différences de tension superficielle et de forme des particules aient des effets très négatifs sur le degré de séparation. Dans la publication Resour.Recovery Conserv., 32, 179-90 37-3 (Plastic Fabrication and Uses), on propose de séparer les deux composants en matière plastique ayant été mélangés mécaniquement en procédant à une charge triboélectrique et en utilisant la différence de déviation dans un champ électrique.

L'invention a notamment pour but de proposer un procédé et un dispositif de séparation des composants d'un mélange de matières plastiques, notamment les polymères constituant ce matériau, qui résout les inconvénients des procédés décrits ci-dessus.

A cet effet l'invention propose un procédé de séparation des composants d'un mélange, ces composants étant en matière plastique-présentant respectivement des températures de fusion Tn, l'indice n correspondant à chaque matière et allant croissant depuis la matière la plus fusible jusqu'à la matière de point de fusion le plus élevé, caractérisé en ce qu'il consiste à chauffer le mélange à une température T, comprise entre la température de fusion Tₙ₋₁ d'un premier composant du mélange à séparer et la température de fusion Tₙ d'un second composant ayant un point de fusion immédiatement supérieur, à séparer la fraction fondue de la fraction solide par application d'une pression sur le mélange dans un espace de confinement muni d'au moins un orifice à travers duquel la fraction fondue s'évacue dudit espace de confinement.

Ainsi, par le choix de la température T, il est possible de séparer un des composants du reste du mélange, soit le plus fusible, soit le moins fusible et par séparations successives, de récupérer chaque composant.

Il est également possible de séparer le mélange en deux fractions constituées elles-mêmes de plusieurs composants.

Selon une caractéristique préfèrée de l'invention, le procédé de l'invention est mis en oeuvre dans une vis d'extrusion, comprenant une zone de chauffage ou de fusion et une zone de séparation et de compression associée et adjacente.

Selon une autre caractéristique de l'invention, la vis d'extrusion peut comprendre plusieurs zones de chauffage ou de fusion successives séparées entre elles par des zones de séparation et de compression associées.

Par ailleurs, elle peut également comprendre une zone de chauffage terminale permettant de fondre la matière la moins fusible et ainsi de la récupérer à l'état fondu.

L'invention a également pour objet un dispositif pour la mise en oeuvre du procédé décrit ci-dessus.

Ce dispositif est constitué par une vis d'extrusion comprenant au moins une zone de chauffage ou de fusion et une zone de séparation et de compression associées dans laquelle le volume de l'espace de confinement défini par le filet de la vis et la paroi du tube ou axe central supportant le filet et celle du fourreau ou gaine de la vis, décroît dans le sens d'avancement du mélange. Cet espace de confinement comprend, selon l'invention, au moins un orifice formant un passage d'évacuation ou d'échappement de la fraction fondue, vers un espace de récupération.

Selon un mode de réalisation de l'invention, la diminution du volume de l'espace de confinement peut être obtenue par augmentation du diamètre du tube ou axe de la vis d'extrusion. Dans ce mode de réalisation les orifices d'échappement sont constitués par des forages ou ouvertures assurant une communication entre l'espace de confinement et un canal central d'évacuation de la fraction fondue séparée.

Dans un autre mode de réalisation de l'invention, la vis d'extrusion comprend, dans la ou les zones de séparation, un second filet définissant avec le premier filet un espace de confinement du mélange, et un second espace appelé espace de récupération de la fraction fondue, ces deux espaces communiquant entre eux par un passage ou orifice d'échappement. Ce second filet a un pas plus élevé que le pas du premier filet.

Ce passage ou cet orifice peut être constitué par des orifices formés sur la paroi du second et/ou du premier filet.

Il peut également être formé par le jeu entre le bord du second filet et la paroi du fourreau de la vis d'extrusion.

Avantageusement un moyen filtrant peut être disposé dans les passages ou orifices d'échappement.

En outre, les espaces de récupération de la matière fondue sont mis en communication avec un canal central d'évacuation défini dans le tube de la vis. Ce canal est avantageusement un canal axial. Il peut être équipé avec une vis d'évacuation permettant d'évacuer la matière fondue séparée.

Dans un autre mode de réalisation de l'invention, la diminution du volume de l'espace de confinement est obtenue par la combinaison des deux modes de réalisation décrits ci-dessus, à savoir d'une part augmentation du diamètre de l'axe de la vis d'extrusion et d'autre part, présence d'un second filet dans la zone de séparation et compression.

Bien entendu, des moyens qui permettraient d'appliquer une compression sur le mélange dans un espace de confinement sont dans le cadre de la présente invention.

Ainsi, le procédé et le dispositif de l'invention sont de mise en oeuvre aisée. Par ailleurs, ils peuvent être utilisés pour tous types de mélanges de matières plastiques, chargées ou non. Ainsi, dans le cas de charges minérales à point de fusion élevée, celles-ci seront séparées et éliminées comme composant le moins fusible. Les charges fusibles pourront être éliminées et isolées de manière analogue à la séparation d'une matière plastique du mélange, ou pourront être éliminées avec un des composants.

Ce procédé et ce dispositif permettent notamment de séparer des composants présents dans le mélange dans des concentrations pondérales comprises entre 1 % et 99 %. Ce procédé et dispositif permettent de séparer les composants d'un alliage de polymère, c'est-à-dire dans lequel chaque composant est présent à une concentration supérieure à 10 %.

D'autres buts, avantages et détails de l'invention apparaîtront plus clairement au vu de la description détaillée d'un mode de réalisation de l'invention faite en référence aux dessins annexés dans lesquels :
- la figure 1 est une représentation schématique d'un premier mode de réalisation d'une vis d'extrusion conforme à l'invention,
- la figure 2 est une représentation agrandie de la zone II de la figure 1,
- la figure 3 est une représentation schématique d'un second mode de réalisation d'une vis d'extrusion conforme à l'invention, sans sa gaine, et
- la figure 4 est une vue agrandie de la zone IV de la figure 3.

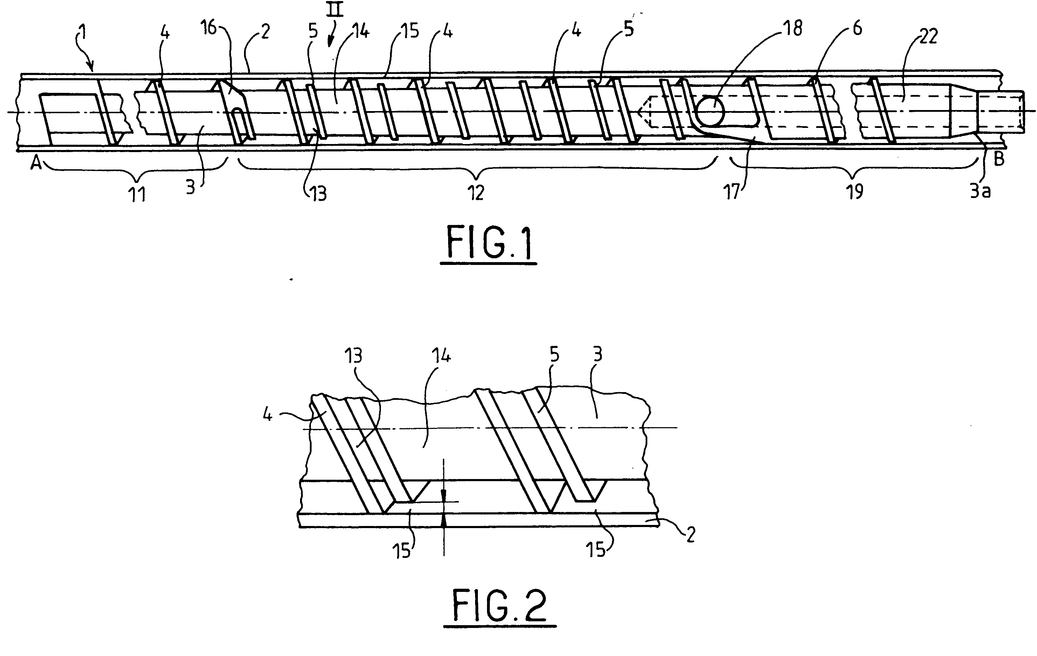

Selon un mode de réalisation de l'invention, et en se référant à la figure 1, le dispositif pour la mise en oeuvre du procédé de séparation de l'invention est constitué par une vis d'extrusion 1 comprenant un fourreau ou gaine 2, un tube ou axe 3 sur la paroi duquel sont formés des filets 4, 5, 6. La vis d'extrusion est actionnée en rotation par un système d'entraînement non représenté.

La vis d'extrusion peut être constituée de plusieurs éléments ou sections portant des filets de profil déterminé. Ces éléments ou sections sont disposés sur l'axe central de la vis. Cette construction d'une vis d'extrusion est usuelle car elle permet d'adapter le profil de la vis à l'application désirée, et donc rendre son utilisation polyvalente.

Le mélange de matières plastiques ou polymères est alimenté à l'extrémité A de la vis d'extrusion dans la zone 11 de chauffage ou fusion. Le mélange est ainsi porté à une température T supérieure à la température de fusion Tn du ou des composants à séparer. Dans cette zone la vis comprend un filet 4 dont les bords viennent sensiblement sans jeu, en contact avec la paroi interne du fourreau 2.

Le mélange partiellement fondu arrive ensuite dans une deuxième zone 12 dite zone de séparation et de compression. Dans cette zone 12, la vis comprend toujours le filet 4. Mais, dans le mode de réalisation illustré aux figures 1 et 2, elle comprend un second filet 5 de pas supérieur au pas du filet 4.

Ainsi, ce filet 5 divise l'espace défini par le filet 4 en deux espèces 13, 14. L'espace 14 est le prolongement de l'espace ou canal défini par le filet 4 dans la zone de préchauffage 11, et permet l'écoulement du mélange vers la sortie B de la vis.

Le volume de l'espace ou canal 14 diminue progressivement sur toute la zone 12 de compression et séparation. Cette diminution est obtenue notamment par la différence du pas des deux filets 4, 5. Par ailleurs, pour accentuer cette diminution le pas du filet 4 peut diminuer progressivement dans la zone 12, tandis que celui du filet 5 peut augmenter progressivement. De manière générale, les profils des filets 4, 5 dans la zone 12 sont déterminés en fonction du degré de compression que l'on désire appliquer sur le mélange pour obtenir la séparation de la phase fondue.

Dans le mode de réalisation illustré, notamment aux figures 1 et 2, la communication entre l'espace 14 de confinement et l'espace 13 de récupération est assurée par le jeu 15 présent entre les bords du filet 5 et la paroi interne du fourreau 2. Ainsi, la fraction fondue du mélange contenu dans l'espace 14 s'écoulera dans l'espace 13 sous l'effet de la compression générée par la diminution de volume de l'espace 14.

L'espace 13 est un canal fermé à chacune de ses extrémités par, par exemple, des points de soudure 16, 17 entre les deux filets 4, 5.

La matière fondue récupérée dans l'espace 13 est évacuée vers l'extérieur de la vis par un forage 18 formé à l'extrémité aval du canal 13 et assurant la communication entre l'espace 13 et un conduit axial 22 formé dans l'axe ou tube 3.

Dans les modes de réalisation illustrés, la fraction solide du mélange sortant de la zone 12 de compression et séparation est acheminée dans une troisième zone 19 dite zone de fusion. Cette zone permet de fondre la fraction solide restante pour permettre une récupération du mélange restant sous forme liquide ou de l'introduire dans une filière pour le récupérer sous forme de jonc.

Par ailleurs, l'axe 3 de la vis possède une extrémité (3a) en forme de cône qui coopère avec un contre-cône non représenté conjugué permettant un déplacement longitudinal de la vis dans son fourreau.

Dans le mode de réalisation illustré, l'axe de la vis 3 a un diamètre croissant depuis l'entrée A vers la sortie B de la vis. Cette forme conique de l'axe contribue à l'augmentation de compression dans l'espace 14. Son déplacement longitudinal dans le fourreau permet de réguler cette compression et donc d'influer sur le degré de séparation des matières.

Le mode de réalisation décrit ci-dessus n'a été donné qu'à titre d'exemple. Ainsi, le dispositif de l'invention peut comprendre plusieurs zones 12, disposées de manière adjacente et à des températures différentes pour assurer une séparation successive des différents constituants du mélange.

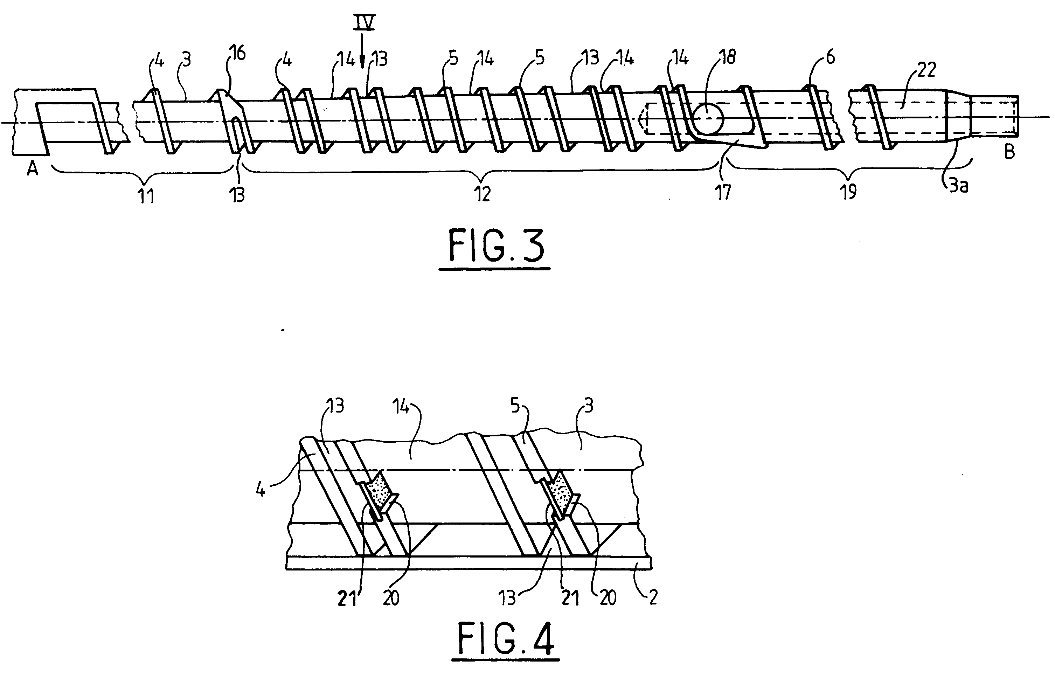

Dans un second mode de réalisation illustré aux figures 3 et 4, le bord supérieur du filet 5 vient en contact avec la paroi interne du fourreau ou de la gaine (non représentée), et a donc une hauteur égale à celle du filet 4. Toutefois il comprend des ouvertures 20 réalisées par exemple par découpage du filet 5. Ces ouvertures sont réparties sur toute la longueur du filet de manière régulière ou irrégulière. Comme plus particulièrement illustrée à la figure 4, un moyen filtrant 21 est fixé, de manière amovible ou non, dans les ouvertures 20. Ce moyen filtrant est, par exemple, une plaque en acier perforée par une multitude de trous de faible surface. Ces trous peuvent être avantageusement obtenus par perforation avec un dispositif au laser.

Ainsi, la fraction fondue sous l'effet de la compression va s'écouler vers l'espace de récupération 13 à travers ces moyens filtrants 21, sans entraînement par le flux fondu de petites particules solides.

Dans un autre mode de réalisation non illustré, la diminution du volume de l'espace 14 peut être due uniquement à une forme conique du fourreau et/ou de la vis. Dans ce cas, la vis pourra ne comporter qu'un filet dans la zone de compression 12, la fraction fondue étant évacuée par des forages formés sur les parois du tube ou axe 3 de la vis, vers un canal collecteur axial prévu dans ledit axe. Toutefois, une vis ou un fourreau de forme conique seront avantageusement utilisés en combinaison avec des vis comprenant deux filets 4 et 5 comme décrits ci-dessus. En effet, cette combinaison permet, par déplacement longitudinal de la vis dans le fourreau de faire varier et donc contrôler le degré de compression appliquée sur le mélange.

Il est également possible de prévoir une vis sans fin dans le ou les canaux collecteurs (22) pour assurer l'évacuation de la fraction fondue séparée vers une des extrémités de la vis.

Les exemples ci-dessous illustreront le fonctionnement du dispositif.

### Exemple 1

Un mélange de polyamide 6 (PA 6) et polytéréphtalate d'éthylène glycol (PET) comprenant 40 % en poids de PA 6 et 60 % en poids de PET est alimenté à l'extrémité A dans le dispositif de l'invention.

Les zones 11 et 12 de la vis sont portées à une température de 220°C, la zone 19 étant à une température de 260°C.

Le mélange à faible point de fusion recueilli par l'orifice 18 a la composition suivante :
- PA 6 :: 79,7 % en poids
- PET :: 20,3 % en poids

Le mélange recueilli à l'extrémité B de la vis extrudeuse a la composition suivante :
- PA 6 :: 4,5 % en poids
- PET :: 95,5 % en poids

Ainsi, le rendement de récupération du PA 6 sous forme enrichie est de 94 % (calculée par rapport à la masse de PA 6 introduite), celui en PET enrichi est de 84 %.

### Exemple 2

L'exemple 1 est répété avec un mélange PA 6 / polypropylène (PP) comprenant 40 % poids de PA 6 et 60 % poids de PP.

Les zones 11 et 12 sont à une température de 170°C et la zone 19 a une température de 220°C.

Le produit recueilli en 18 a la composition suivante :
- Polypropylène :: 95 %
- PA 6 :: 5 %

Le produit recueilli à l'extrémité B a la composition suivante :
- Polypropylène :: 17,8 %
- PA 6 :: 82,2%

Le rendement en polypropylène enrichi est de 93 %, celui en polyamide est de 87 %.

### Exemple 3

Un tapis, après déchiquetage est alimenté en A dans le dispositif de l'invention, la température des zones 11, 12 est de 150°C, celle de la zone 19 est de 220°C.

Les mélanges récupérés respectivement en 18 (mélange à bas point de fusion) et à l'extrémité B (mélange à point de fusion élevé) ont les compositions suivantes :

| Constituants | Mélanges à bas point de fusion (18) | Mélange à point de fusion élevé (B) |
|---|---|---|
| Copolymère de point de fusion 110°C | 97,80 % | 0 % |
| Polypropylène | 1,20 % | 17,00 % |
| PA 6 | 1,00 % | 83 % |

Ces exemples démontrent la possibilité de séparer les composants d'un mélange de matières thermoplastiques, quelle que soit la proportion de chacun des constituants.

## Revendications

1. Procédé de séparation des composants d'un mélange, ces composants étant des matières plastiques présentant respectivement des températures de fusion Tₙ, l'indice n correspondant à chaque matière et allant croissant depuis la matière la plus fusible jusqu'à la matière de point de fusion le plus élevé, caractérisé en ce qu'il consiste à chauffer le mélange à une température T, comprise entre la température de fusion Tₙ₋₁ d'un composant du mélange à séparer et la température de fusion Tₙ d'un second composant ayant un point de fusion immédiatement supérieur, à séparer la fraction fondue de la fraction solide par application d'une compression sur le mélange dans un espace de confinement (14) muni d'au moins un orifice (15) à travers duquel la matière fondue s'évacue dudit espace de confinement (14).

2. Procédé selon la revendication 1, caractérisé en ce que les opérations précédentes peuvent être répétées pour séparer les composants du mélange les uns des autres.

3. Procédé selon la revendication 1 ou 2, caractérisé en ce qu'il est mis en oeuvre dans une vis d'extrusion comprenant au moins une zone de chauffage ou de fusion (11) et une zone de séparation et de compression (12) associée et adjacente.

4. Procédé selon l'une des revendications 1 à 3, caractérisé en ce que la matière solide séparée est récupérée sous forme solide ou à l'état fondu après un chauffage subséquent à la séparation de la fraction fondue.

5. Vis d'extrusion pour la mise en oeuvre du procédé selon l'une des revendications 1 à 4, caractérisée en ce qu'elle comprend au moins une zone de chauffage ou de fusion (11) et une zone de séparation et de compression (12) associée dans laquelle le volume de l'espace de confinement (14) défini par le filet et les parois de la gaine de la vis et son axe décroît dans le sens d'avancement du mélange, et en ce que cet espace de confinement (14) comprend au moins un orifice (15) permettant à la fraction fondue de s'échapper dudit espace vers un espace (13) de récupération.

6. Vis d'extrusion selon la revendication 5, caractérisée en ce que le diamètre de l'axe (3) de la vis d'extrusion (1) dans la zone de séparation et de compression (12), croit dans le sens d'avancement de la matière, et en ce qu'il comprend des orifices (15) mettant en communication l'espace de confinement (14) et un canal central d'évacuation de la fraction fondue.

7. Vis d'extrusion selon la revendication 5 ou 6, caractérisée en ce qu'elle comprend, dans la zone de séparation et de compression (12) un deuxième filet (5) définissant avec le premier filet (4) l'espace de confinement (14) du mélange, et un second espace (13) appelé espace de récupération de la fraction fondue, un passage pour la fraction fondue étant prévu entre l'espace de confinement(14) et l'espace de récupération (13), le second filet (5) ayant un pas plus élevé que le pas du premier filet (4).

8. Vis selon la revendication 7, caractérisée en ce que le passage entre l'espace de confinement (14) et l'espace de récupération (13) est constitué par au moins un orifice (15), (20) formé dans la paroi du deuxième filet (5) et/ou du premier filet (4).

9. Vis selon l'une des revendications 5 à 8, caractérisée en ce que des moyens filtrants (21) sont disposés dans les passages d'évacuation (15), (20) formant le passage d'évacuation de la fraction fondue.

10. Vis selon l'une des revendication 7 ou 9, caractérisée en ce que le passage entre l'espace de confinement (14) et l'espace de récupération (13) est constitué par le jeu (15) défini entre le bord du deuxième filet (5) et la paroi de la gaine (2) de la vis.

11. Vis selon l'une des revendication 7, 8 ou 9, caractérisée en ce que le passage d'évacuation de la fraction fondue est constitué par des découpes (20) du filet (5).

12. Vis selon l'une des revendications 5 à 11, caractérisée en ce qu'elle comprend un orifice d'évacuation axial (18) permettant de mettre en contact l'espace de récupération (13) de la matière fondue avec un canal d'évacuation de celle-ci hors de la vis d'extrusion (1).

13. Vis selon la revendication 12, caractérisée en ce que le canal central d'évacuation comprend une vis sans fin d'évacuation.

14. Vis selon l'une des revendications 5 à 13, caractérisée en ce qu'elle comprend plusieurs zones de chauffage et séparation associées, chaque ensemble zone de chauffage/zone de séparation étant portée à une température T supérieure à la température de fusion du composant à séparer du mélange entrant dans lesdites zones.

15. Vis selon l'une des revendications 5 à 14, caractérisée en ce qu'elle comprend dans sa dernière partie, avant l'évacuation de la matière la moins fusible ou de la fraction solide du mélange, une zone de chauffage (19) portée à une température supérieure à la température de fusion du composant le moins fusible du mélange.
